# EUROPEAN PATENT APPLICATION

(11) **EP 4 818 122 A1**
(43) Date of publication of application: **07.10.2026**
(21) Application number: 26169320.4
(22) Date of filing: 30.03.2026
(51) Int. Cl.: C01G 53/506, H01M 4/525

(54) **CATHODE ACTIVE MATERIAL FOR LITHIUM SECONDARY BATTERY AND METHOD OF MANUFACTURING THE SAME**

(30) Priority: 01.04.2025 KR 20250042442; 28.11.2025 KR 20250185759
(71) Applicant: SK On Co., Ltd., Seoul 03161 (KR); SK Innovation Co., Ltd., Seoul 03188 (KR)
(72) Inventor: KIM, Jong Hwa, 34124 Daejeon (KR); YOO, Yeong Bin, 34124 Daejeon (KR); KONG, Nyung Joo, 34124 Daejeon (KR); PARK, Sung Soon, 34124 Daejeon (KR); SEO, Jin Soo, 34124 Daejeon (KR); YOON, Jeong Bae, 34124 Daejeon (KR)
(74) Representative: Stolmár & Partner Patentanwälte PartG mbB

(57) **Abstract**

A cathode active material for a lithium secondary battery according to exemplary embodiments of the present disclosure includes a lithium-nickel metal oxide having secondary particles having a pseudo-single-crystal structure. The number of primary particles included in the secondary particle is 20 to 200. Among the primary particles, the number of primary particles having a major axis length of 0.8 µm or more is 20 to 80.

## Description

### [BACKGROUND OF THE INVENTION]

### 1. Field of the Invention

The present disclosure relates to a cathode active material for a lithium secondary battery and a method of manufacturing the same.

### 2. Description of the Related Art

Secondary batteries are batteries that can be repeatedly charged and discharged. With the development of information and communication and display industries, they have been widely applied as power sources for portable electronic communication devices, such as camcorders, mobile phones, and laptop PCs. In addition, battery packs including secondary batteries have recently been developed and applied as power sources for eco-friendly vehicles, such as electric vehicles.

Examples of secondary batteries may include a lithium secondary battery, a nickel-cadmium battery, a nickel-hydrogen battery and the like. Among them, the lithium secondary battery has a high operating voltage and a high energy density per unit weight, and thus is advantageous in terms of charging speed and weight reduction. In this regard, the lithium secondary battery has been actively developed and applied to various industrial fields.

For example, NCM-based active materials containing nickel, cobalt and manganese are used as cathode active materials for a lithium secondary battery. Examples of NCM-based active materials may include mid-nickel (Mid-Ni) materials and high-nickel (High-Ni) materials. In addition, as the application scope of lithium secondary batteries expands to large devices such as electric vehicles, there is a need to develop cathodes having improved electrochemical performance.

### [SUMMARY OF THE INVENTION]

An object of the present disclosure is to provide a cathode active material for a lithium secondary battery having improved electrochemical and cycle life characteristics.

Another object of the present disclosure is to provide a method of manufacturing the cathode active material for a lithium secondary battery.

A cathode active material for a lithium secondary battery according to exemplary embodiments of the present disclosure includes a lithium-nickel metal oxide having a secondary particle structure in which primary particles are agglomerated, wherein the number of primary particles included in the secondary particle is 20 to 200, and among the primary particles, the number of primary particles having a major axis length of 0.8 µm or more is 20 to 80.

In exemplary embodiments, the number of primary particles included in the secondary particle may be 80 to 200.

In exemplary embodiments, among the primary particles, the number of primary particles having a major axis length of 0.8 µm or more may be 30 to 80.

In exemplary embodiments, a relative standard deviation (%RSD) of the major axis lengths of the primary particles having a major axis length of 0.8 µm or more may be 35 or less.

In exemplary embodiments, a relative standard deviation (%RSD) of the major widths of the primary particles having a major axis length of 0.8 µm or more may be 40 or less.

In exemplary embodiments, the number of primary particles having a major axis length of 1.0 µm or more may be 20 to 50.

In exemplary embodiments, a relative standard deviation (%RSD) of the major axis lengths of the primary particles having a major axis length of 1.0 µm or more may be 35 or less.

In exemplary embodiments, a relative standard deviation (%RSD) of the major widths of the primary particles having a major axis length of 1.0 µm or more may be 40 or less.

In exemplary embodiments, the primary particles may have a median particle diameter (D50) of 0.8 µm to 3 µm.

In exemplary embodiments, the lithium-nickel metal oxide may further include at least one element selected from the group consisting of W, Mo, Nb, B, Ta, and Sn.

In exemplary embodiments, a span of the secondary particle, expressed by Equation 1 below, may be 0.9 or less:

[Equation 1] $Span = \left(D90-D10\right) / D 50$

In Equation 1, D10 may be a particle size corresponding to a cumulative percentage of 10% in a volume-based cumulative particle size distribution of the secondary particles, D90 may be a particle size corresponding to a cumulative percentage of 90% in the volume-based cumulative particle size distribution of the secondary particles, and D50 may be a particle size corresponding to a cumulative percentage of 50% in the volume-based cumulative particle size distribution of the secondary particles.

In exemplary embodiments, a circularity of the secondary particle, expressed by Equation 2 below, may be 0.70 or more:

[Equation 2] $Circularity = \frac{4 πA}{{P}^{2}}$

In Equation 2, A may be a cross-sectional area of the secondary particle, and P may be a length of a boundary of the secondary particle.

In exemplary embodiments, a roundness of the secondary particles, expressed by Equation 3 below, may be 0.90 or more:

[Equation 3] $Roundness = \frac{4 A}{{L}^{2} π}$

In Equation 3, A may be a cross-sectional area of the secondary particle, and L may be the major axis length of the secondary particle.

A lithium secondary battery including a cathode according to exemplary embodiments of the present disclosure includes the above-described cathode active material; and an anode disposed opposite the cathode.

The cathode active material according to exemplary embodiments of the present disclosure may have a pseudo single-crystal structure in the form of a cluster in which a plurality of primary particles are agglomerated, thereby effectively improving output characteristics, long-term durability, and cycle life characteristics.

The cathode active material according to exemplary embodiments of the present disclosure may exhibit improved electrochemical characteristics due to the uniform size of the primary particles.

The lithium secondary battery including the cathode active material of the present disclosure may be widely applied in green technology fields, such as electric vehicles, battery charging stations, as well as solar power generation, wind power generation, and the like, which use batteries. In addition, the lithium secondary battery including the cathode active material of the present disclosure may be used in eco-friendly electric vehicles, hybrid vehicles, and the like, which are aimed at mitigating climate change by reducing air pollution and greenhouse gas emissions.

### [BRIEF DESCRIPTION OF THE DRAWINGS]

The above and other objects, features and advantages of the present disclosure will be more clearly understood from the following detailed description taken in conjunction with the accompanying drawings, in which:
FIG. 1 is a flowchart describing a method of manufacturing a cathode active material for a lithium secondary battery according to exemplary embodiments;
FIGS. 2 and 3 are a schematic plan view and a schematic cross-sectional view, respectively, illustrating a lithium secondary battery according to exemplary embodiments;
FIGS. 4A to 13C are scanning electron microscope (SEM) images (magnification: x10,000) of primary particles of cathode active materials according to exemplary embodiments and comparative examples, respectively;
FIGS. 14A to 23B are scanning electron microscope (SEM) images of secondary particles of cathode active materials according to the embodiments and comparative examples, respectively. In FIGS. 14A to 23B, each of the figures denoted by "A" is a low-magnification image (magnification: x1,000), and each of the figures denoted by "B" is a high-magnification image (magnification: x10,000); and
FIGS. 24A to 33C are scanning electron microscope (SEM) images (magnification: x5,000) of secondary particles of cathode active materials according to the embodiments and comparative examples, respectively, and schematically illustrate shapes of the secondary particles of cathode active materials of the respective embodiments and comparative examples.

### [DETAILED DESCRIPTION OF THE INVENTION]

The present disclosure provides a cathode active material for a lithium secondary battery (hereinafter, also abbreviated as a "cathode active material") according to exemplary embodiments.

The cathode active material according to exemplary embodiments of the present disclosure may have a pseudo single-crystal structure in the form of a cluster in which a plurality of primary particles are agglomerated (hereinafter, also abbreviated as a "pseudo single-crystal"), which corresponds to an intermediate structure in terms of morphology between a polycrystalline structure and a single-crystal structure. For example, the cathode active material according to exemplary embodiments of the present disclosure may have a form in which a relatively small number of single-crystal primary particles having relatively large diameters are agglomerated to form a secondary particle.

Accordingly, the resistance of the cathode active material may be reduced as compared with a case in which the cathode active material has a single-crystal structure (hereinafter, also abbreviated as a "single-crystal"), and, as compared with a case in which the cathode active material has a polycrystalline structure (hereinafter, also abbreviated as a "polycrystalline"), side reactions between the cathode active material and an electrolyte and the occurrence of internal cracks may be suppressed, thereby improving long-term durability and cycle life characteristics.

In exemplary embodiments, the number of primary particles of the cathode active material (hereinafter, also abbreviated as "primary particles") included in a secondary particle having a pseudo single-crystal structure (hereinafter, also abbreviated as a "secondary particle") may be 20 or more, 25 or more, 30 or more, 35 or more, 40 or more, 45 or more, 50 or more, 55 or more, 60 or more, 65 or more, 70 or more, 75 or more, 80 or more, 85 or more, 90 or more, 95 or more, or 100 or more. Within this range, the cathode active material having a pseudo single-crystal structure may exhibit lower resistance than a cathode active material having a general single-crystal structure, thereby improving the output characteristics of the lithium secondary battery.

In exemplary embodiments, the number of primary particles included in the secondary particle may be 200 or less, 195 or less, 190 or less, 185 or less, 180 or less, 175 or less, 170 or less, 165 or less, 160 or less, 155 or less, 150 or less, 145 or less, 140 or less, 135 or less, 130 or less, 125 or less, or 120 or less. Within this range, the cathode active material having a pseudo single-crystal structure may effectively suppress side reactions with an electrolyte and the occurrence of internal cracks in long-term evaluations, as compared with a cathode active material having a general polycrystalline structure.

In exemplary embodiments, the number of primary particles included in the secondary particle may be 20 to 200, 25 to 200, 30 to 200, 35 to 200, 40 to 200, 45 to 200, 50 to 200, 60 to 200, 70 to 200, or 80 to 200. Within this range, the cathode active material having a pseudo single-crystal structure may effectively suppress side reactions with an electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

In exemplary embodiments, the size of the primary particles may be substantially uniform.

In exemplary embodiments, the size of the primary particles may be controlled within a predetermined range, and the relative standard deviation (%RSD) of the major axis length and/or the major width may be controlled within a predetermined range.

In exemplary embodiments, the primary particles may have a median particle diameter (D50) of 0.8 µm or more, 0.81 µm or more, 0.82 µm or more, 0.83 µm or more, 0.84 µm or more, 0.85 µm or more, 0.86 µm or more, 0.87 µm or more, 0.88 µm or more, 0.89 µm or more, 0.9 µm or more, 0.91 µm or more, 0.92 µm or more, 0.93 µm or more, 0.94 µm or more, 0.95 µm or more, 0.96 µm or more, 0.97 µm or more, 0.98 µm or more, 0.99 µm or more, or 1.0 µm or more. Within this range, the cathode active material having a pseudo single-crystal structure may effectively suppress side reactions with the electrolyte and the occurrence of internal cracks in long-term evaluations, as compared with the cathode active material having a general polycrystalline structure.

In exemplary embodiments, the median particle diameter (D50) of the primary particles may be 3 µm or less, 2.9 µm or less, 2.8 µm or less, 2.7 µm or less, 2.6 µm or less, 2.5 µm or less, 2.4 µm or less, 2.3 µm or less, 2.2 µm or less, 2.1 µm or less, or 2.0 µm or less. Within this range, the cathode active material having a pseudo single-crystal structure may exhibit lower resistance than the cathode active material having a general single-crystal structure, thereby improving the output characteristics of the lithium secondary battery.

In exemplary embodiments, the median particle diameter (D50) of the primary particles may be 0.8 µm to 3 µm, 0.8 µm to 2.9 µm, 0.8 µm to 2.8 µm, 0.8 µm to 2.7 µm, 0.8 µm to 2.6 µm, 0.8 µm to 2.5 µm, 0.8 µm to 2.4 µm, 0.8 µm to 2.3 µm, 0.8 µm to 2.2 µm, 0.8 µm to 2.1 µm, or 0.8 µm to 2.0 µm. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The median particle diameter (D50) of the primary particles may be a particle diameter corresponding to a cumulative percentage of 50% in a volume-based cumulative particle size distribution of the primary particles.

In some embodiments, the number of primary particles having a major axis length of 0.8 µm or more within the secondary particle may be 20 or more, 21 or more, 22 or more, 23 or more, 24 or more, 25 or more, 26 or more, 27 or more, 28 or more, 29 or more, 30 or more, 31 or more, or 32 or more. Within this range, the cathode active material having a pseudo single-crystal structure may effectively suppress side reactions with the electrolyte and the occurrence of internal cracks in long-term evaluations, as compared with the cathode active material having a general polycrystalline structure.

The number of primary particles having a major axis length of 0.8 µm or more within the secondary particle may be 100 or less, 99 or less, 98 or less, 97 or less, 96 or less, 95 or less, 94 or less, 93 or less, 92 or less, 91 or less, 90 or less, 89 or less, 88 or less, 87 or less, 86 or less, 85 or less, 84 or less, 83 or less, 82 or less, 81 or less, 80 or less, 79 or less, 78 or less, 77 or less, 76 or less, 75 or less, 74 or less, 73 or less, 72 or less, 71 or less, 70 or less, 69 or less, 68 or less, 67 or less, 66 or less, 65 or less, 64 or less, 63 or less, 62 or less, 61 or less, or 60 or less. Within this range, the cathode active material having a pseudo single-crystal structure may exhibit lower resistance than the cathode active material having a general single-crystal structure, thereby improving the output characteristics of the lithium secondary battery.

The number of primary particles having a major axis length of 0.8 µm or more within the secondary particle may be 20 to 100, 20 to 90, 20 to 80, or 30 to 80. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The relative standard deviation (%RSD) of the major axis length of the primary particles having a major axis length of 0.8 µm or more within the secondary particle may be 35 or less, 34 or less, 33 or less, 32 or less, 31 or less, 30 or less, 29 or less, 28 or less, 27 or less, 26 or less, or 25 or less. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The relative standard deviation (%RSD) of the major widths of the primary particles having a major axis length of 0.8 µm or more within the secondary particle may be 40 or less, 39 or less, 38 or less, 37 or less, 36 or less, 35 or less, 34 or less, 33 or less, 32 or less, 31 or less, 30 or less, 29 or less, 28 or less, 27 or less, 26 or less, or 25 or less. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

In some embodiments, the number of primary particles having a major axis length of 1.0 µm or more within the secondary particle may be 20 or more, 21 or more, 22 or more, 23 or more, 24 or more, 25 or more, 26 or more, 27 or more, 28 or more, 29 or more, 30 or more, 31 or more, 32 or more, 33 or more, 34 or more, or 35 or more. Within this range, the cathode active material having a pseudo single-crystal structure may effectively suppress side reactions with the electrolyte and the occurrence of internal cracks in long-term evaluations, as compared with the cathode active material having a general polycrystalline structure.

In some embodiments, the number of primary particles having a major axis length of 1.0 µm or more within the secondary particle may be 60 or less, 59 or less, 58 or less, 57 or less, 56 or less, 55 or less, 54 or less, 53 or less, 52 or less, 51 or less, 50 or less, 49 or less, 48 or less, 47 or less, 46 or less, or 45 or less. Within this range, the cathode active material having a pseudo single-crystal structure may exhibit lower resistance than the cathode active material having a general single-crystal structure, thereby improving the output characteristics of the lithium secondary battery.

In some embodiments, the number of primary particles having a major axis length of 1.0 µm or more within the secondary particle may be 20 to 60, 20 to 55, or 20 to 50. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The relative standard deviation (%RSD) of the major axis lengths of the primary particles having a major axis length of 1.0 µm or more within the secondary particle may be 35 or less, 34 or less, 33 or less, 32 or less, 31 or less, 30 or less, 29 or less, 28 or less, 27 or less, or 26 or less, 25 or less, 24 or less, 23 or less, 22 or less, 21 or less, or 20 or less. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The relative standard deviation (%RSD) of the major widths of primary particles having a major axis length of 1.0 µm or more within the secondary particle may be 40 or less, 39 or less, 38 or less, 37 or less, 36 or less, 35 or less, 34 or less, 33 or less, 32 or less, 31 or less, 30 or less, 29 or less, 28 or less, 27 or less, or 26 or less, 25 or less, 24 or less, 23 or less, 22 or less, 21 or less, or 20 or less. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

The major axis of the primary particles may be defined as the longest line among lines passing through a cross-section of the primary particles, and the major width of the primary particles may be defined as the longest line among straight lines perpendicular to the major axis.

The span of the secondary particle according to exemplary embodiments may be 0.9 or less, 0.89 or less, 0.88 or less, 0.87 or less, 0.86 or less, 0.85 or less, 0.84 or less, 0.83 or less, 0.82 or less, 0.81 or less, 0.8 or less, 0.79 or less, 0.78 or less, 0.77 or less, 0.76 or less, 0.75 or less, 0.74 or less, 0.73 or less, 0.72 or less, 0.71 or less, or 0.7 or less. Within this range, the cathode active material having a pseudo single-crystal structure may effectively suppress side reactions with the electrolyte and the occurrence of internal cracks in long-term evaluations, as compared with the cathode active material having a general polycrystalline structure, while exhibiting lower resistance than the cathode active material having a general single-crystal structure, thereby improving the output characteristics of the lithium secondary battery.

A span of the secondary particle according to exemplary embodiments may be 0.55 or more, 0.56 or more, 0.57 or more, 0.58 or more, 0.59 or more, 0.60 or more, 0.61 or more, 0.62 or more, 0.63 or more, 0.64 or more, or 0.65 or more. The span of the secondary particle according to exemplary embodiments may be 0.55 to 0.9, or 0.57 to 0.88.

In exemplary embodiments, the span of the secondary particle of the cathode active material may be expressed by Equation 1 below. [Equation 1] $Span = \left(D90-D10\right) / D 50$

In Equation 1, D10 may be a particle size corresponding to a cumulative percentage of 10% in a volume-based cumulative particle size distribution of the secondary particles, D90 may be a particle size corresponding to a cumulative percentage of 90% in the volume-based cumulative particle size distribution of the secondary particles, and D50 may be a particle size corresponding to a cumulative percentage of 50% in the volume-based cumulative particle size distribution of the secondary particles.

In exemplary embodiments, the D10 of the secondary particles may be 5 µm to 8 µm, the D50 may be 7 µm to 13 µm, and the D90 may be 11 µm to 14.5 µm.

In some embodiments, the D50 of the secondary particles may be 7 µm or more, 7.2 µm or more, 7.5 µm or more, 7.8 µm or more, 8.0 µm or more, 8.2 µm or more, 8.5 µm or more, 8.8 µm or more, or 9.0 µm or more. In some embodiments, the D50 of the secondary particles may be 13.0 µm or less, 12.8 µm or less, 12.5 µm or less, 12.3 µm or less, 12.0 µm or less, 11.8 µm or less, 11.5 µm or less, 11.3 µm or less, 11.0 µm or less, 10.8 µm or less, or 10.5 µm or less.

A circularity of the secondary particles according to exemplary embodiments may be 0.70 or more, 0.71 or more, 0.72 or more, 0.73 or more, 0.74 or more, 0.75 or more, 0.76 or more, 0.77 or more, 0.78 or more, 0.79 or more, or 0.80 or more. Within this range, the secondary particles may maintain a spherical shape without breaking.

A roundness of the secondary particles according to exemplary embodiments may be 0.90 or more, 0.91 or more, 0.92 or more, 0.93 or more, 0.94 or more, 0.95 or more, 0.96 or more, 0.97 or more, or 0.98 or more. Within this range, the secondary particles may maintain a spherical shape without breaking.

In exemplary embodiments, the circularity may be expressed by Equation 2 below. [Equation 2] $Circularity = \frac{4 πA}{{P}^{2}}$

In Equation 2, A may be a cross-sectional area of the secondary particle, and P may be a length of a boundary of the secondary particle.

For example, the cross-sectional area of the secondary particle may be a cross-sectional area of a particle shape derived from an image of the secondary particle captured by a scanning electron microscope (SEM). For example, the boundary of the secondary particle may be an outline of a shape derived from the image of the secondary particle captured by the scanning electron microscope (SEM).

In exemplary embodiments, the roundness may be expressed by Equation 3 below. [Equation 3] $Roundness = \frac{4 A}{{L}^{2} π}$

In Equation 3, A may be the cross-sectional area of the secondary particle, and L may be a major axis length of the secondary particle.

For example, the cross-sectional area of the secondary particle may be the cross-sectional area of the particle shape derived from the image of the secondary particle taken by the scanning electron microscope (SEM). For example, the major axis length of the secondary particle may be a major axis length measured from the shape derived from the image of the secondary particle taken by the scanning electron microscope (SEM).

In exemplary embodiments, the cathode active material may include a compound capable of reversibly intercalating and deintercalating lithium ions.

According to exemplary embodiments, the cathode active material may include a lithium-nickel metal oxide. The lithium-nickel metal oxide may further include at least one of cobalt (Co), manganese (Mn) and aluminum (Al).

In some embodiments, the cathode active material or the lithium-nickel metal oxide may include a layered structure or a crystal structure represented by Formula 1 below.

[Formula 1] LiₓNiₐM_{b}O_{2+z}

In Formula 1, x, a, b and z may satisfy 0.88≤x≤1.2, 0.6≤a≤0.99, 0.01≤b≤0.4, and -0.5≤z≤0.1. As described above, M may include Co, Mn and/or Al.

The chemical structure represented by Formula 1 indicates a bonding relationship among elements included in the layered structure or the crystal structure of the cathode active material, and does not exclude the presence of additional elements. For example, M includes Co and/or Mn, and Co and/or Mn may be provided as main active elements of the cathode active material together with Ni. Here, it should be understood that Formula 1 is provided to express the bonding relationship between the main active elements, and is a formula encompassing the introduction and substitution of additional elements.

In one embodiment, the cathode active material may further include auxiliary elements which are added to the main active elements, in order to enhance chemical stability thereof or the layered structure/crystal structure. The auxiliary element may be incorporated into the layered structure/crystal structure together with the main active elements to form bonds, and it should be understood that this case is also included within the chemical structure range represented by Formula 1.

The auxiliary element may include, for example, at least one selected from the group consisting of Na, Mg, Ca, Y, Ti, Hf, V, Nb, Ta, Cr, Mo, W, Fe, Cu, Ag, Zn, B, Al, Ga, C, Si, Sn, Ra or P. The auxiliary element may also act, for example, as an auxiliary active element that contributes to the capacity/output activity of the cathode active material together with Co or Mn, such as Al.

For example, the cathode active material or the lithium-nickel metal oxide may include a layered structure or a crystal structure represented by Formula 1-1 below.

[Formula 1-1] LiₓNiₐM1_{b1}M2_{b2}O_{2+z}

In Formula 1-1, M1 may include Co, Mn and/or Al. M2 may include the auxiliary elements described above. In Formula 1-1, x, a, b1, b2 and z may satisfy 0.88≤x≤1.2, 0.6≤a≤0.99, 0.01≤b1+b2≤0.4, and -0.5≤z≤0.1.

The cathode active material may further include a coating element or a dopant. For example, elements which are substantially the same as or similar to the above-described auxiliary elements may be used as the coating element or the dopant. For example, one of the above-described elements alone or a combination of two or more thereof may be used as the coating element or the dopant.

Specifically, one or more elements selected from W, Mo, Nb, B, Ta, and Sn may be used alone or in combination of two or more thereof as the dopant.

In some embodiments, elements such as Sr, Zr, La, and Ba may not be used as the dopant. Accordingly, while preventing excessive growth of primary particles of the cathode active material, uniform growth thereof may be promoted.

For example, the content of the dopant may be 0.05 mol% or more, 0.06 mol% or more, 0.07 mol% or more, 0.08 mol% or more, 0.09 mol% or more, 0.1 mol% or more, or 0.15 mol% or more, based on the total molar amount of Ni, M1 and M2. Within this range, uniform growth of the primary particles may be promoted.

For example, the content of the dopant may be 1 mol% or less, 0.95 mol% or less, 0.9 mol% or less, 0.85 mol% or less, 0.8 mol% or less, 0.75 mol% or less, 0.7 mol% or less, 0.65 mol% or less, 0.6 mol% or less, 0.55 mol% or less, or 0.5 mol% or less, based on the total molar amount of Ni, M1 and M2. Within this range, deterioration of the electrochemical performance of the secondary battery may be prevented.

For example, the content of the dopant may be 0.05 mol% to 1 mol%, 0.1 mol% to 0.8 mol%, 0.12 mol% to 0.6 mol%, or 0.15 mol% to 0.5 mol%, based on the total molar amount of Ni, M1 and M2. For example, in Formula 1-1, b2 may satisfy 0.0005≤b2≤0.01, 0.001≤b2≤0.008, 0.0012≤b2≤0.006, or 0.0015≤b2≤0.005. Within this range, while preventing deterioration of electrochemical performance of the secondary battery, uniform growth of the primary particles may be promoted.

The coating element or the dopant may be present on the surface of the lithium-nickel metal oxide particles, or may penetrate through the surface of the lithium-nickel metal oxide particles to be incorporated into the bonding structure represented by Formula 1 or Formula 1-1.

The cathode active material may include a nickel-cobalt-manganese (NCM)-based lithium oxide. In this case, an NCM-based lithium oxide with an increased content of nickel may be used.

Nickel (Ni) be provided as as a transition metal associated with the output and capacity of the lithium secondary battery.

For example, NCM-based lithium oxides may be used, such as Mid-Ni, having a nickel content (e.g., a mole fraction of nickel based on the total molar amount of nickel, cobalt and manganese) of 0.6 or more and less than 0.8, or High-Ni, having a nickel content of 0.8 or more.

By employing the NCM-based lithium oxide having the above-described nickel content in the cathode active material, the capacity characteristics of the cathode and the lithium secondary battery may be improved.

However, as the Ni content increases, the long-term storage stability and cycle life stability of the cathode or the secondary battery may be relatively reduced, and side reactions with the electrolyte may also increase. Nevertheless, according to exemplary embodiments, by including Co, the cycle life stability and capacity retention characteristics may be improved by Mn, while electrical conductivity is maintained.

The content of Ni (e.g., the mole fraction of nickel based on the total molar amount of nickel, cobalt and manganese) in the NCM-based lithium oxide may be 0.6 or more, 0.7 or more, or 0.8 or more. In some embodiments, the content ofNi may be 0.6 to 0.95, 0.7 to 0.95, 0.8 to 0.95, 0.82 to 0.95, 0.83 to 0.95, 0.84 to 0.95, 0.85 to 0.95, or 0.88 to 0.95.

In some embodiments, the cathode active material may include a lithium cobalt oxide-based active material, a lithium manganese oxide-based active material, a lithium nickel oxide-based active material, or a lithium iron phosphate (LFP)-based active material (e.g., LiFePO₄).

In some embodiments, the cathode active material may include, for example, a manganese (Mn)-rich active material, a lithium (Li)-rich layered oxide (LLO)/over-lithiated oxide (OLO)-based active material, or a cobalt (Co)-less active material, which has a chemical structure or a crystal structure represented by Formula 2 below.

[Formula 2] p[Li₂MnO₃]·(1-p)[Li_{q}JO₂]

In Formula 2, p and q may satisfy 0<p<1, and 0.9≤q≤1.2, and J may include at least one element selected from Mn, Ni, Co, Fe, Cr, V, Cu, Zn, Ti, Al, Mg and B.

The above-described cathode active material for a lithium secondary battery may be manufactured by controlling calcination conditions (such as temperature, time, etc.), the type and/or content of the dopant.

Hereinafter, exemplary embodiments of a method of manufacturing the above-described cathode active material for a lithium secondary battery will be described.

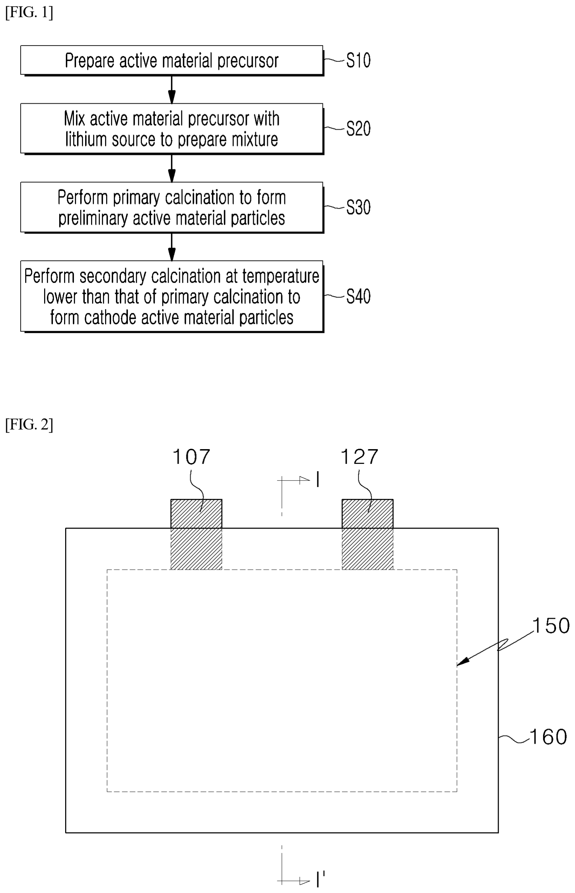

FIG. 1 is a flowchart describing the method of manufacturing a cathode active material for a lithium secondary battery according to exemplary embodiments;

Referring to FIG. 1, an active material precursor may be prepared by reacting active material metal sources (e.g., process S10). The active material metal sources may include a manganese source and a nickel source. In one embodiment, the active material metal source may further include a cobalt source.

Examples of the nickel source may include nickel sulfate (NiSO₄), nickel hydroxide (Ni(OH)₂), nickel nitrate (Ni(NO₃)₂), nickel acetate (Ni(CH₃CO₂)₂), and hydrates thereof. Examples of the manganese source may include manganese sulfate (MnSO₄), manganese hydroxide (Mn(OH)₂), manganese nitrate (Mn(NO₃)₂), manganese acetate (Mn(CH₃CO₂)₂), and hydrates thereof. Examples of the cobalt source may include cobalt sulfate (CoSO₄), cobalt hydroxide (Co(OH)₂), cobalt nitrate (Co(NO₃)₂), cobalt carbonate (CoCO₃), and hydrates thereof.

In one embodiment, nickel sulfate, manganese sulfate, and cobalt sulfate may be used as the nickel source, the manganese source, and the cobalt source, respectively.

According to exemplary embodiments, the above-described active material metal sources may be mixed and reacted, for example, by a co-precipitation method, to obtain an active material precursor. For example, the active material precursor may be prepared in the form of nickel-manganese hydroxide or nickel-manganese-cobalt hydroxide.

In exemplary embodiments, the active material precursor may have a median particle diameter (D50) of 5 µm to 16 µm, 6 µm to 15 µm, or 7 µm to 14 µm. Within this range, the number of primary particles included in the secondary particle may be maintained within an appropriate range, while preventing occurrence of particle cracking.

To promote the co-precipitation reaction, a precipitant and/or a chelating agent may be used. The precipitant may include an alkaline compound, such as sodium hydroxide (NaOH) or sodium carbonate (Na₂CO₃). The chelating agent may include, for example, ammonium hydroxide or ammonium carbonate.

In some embodiments, the active material metal sources and the above-described dopant-containing source (e.g., W, Mo, Nb, B, Ta, Sn, etc.) may be introduced together. By introducing the dopant-containing source together, the primary particles may be uniformly grown. For example, the dopant-containing sources may include WO₃, MoO₃, Nb₂O₅, H₃BO₃, Ta₂O₅, and SnO₂.

In exemplary embodiments, the amount of the dopant introduced may be 0.01 mol% to 1 mol%, 0.03 mol% to 1 mol%, or 0.05 mol% to 1 mol%, based on the total molar amount of the introduced active material metal sources and the dopant-containing source. Within this range, while preventing deterioration of electrochemical performance of the secondary battery, uniform growth of the primary particles may be promoted.

The active material precursor may be mixed with a lithium source to prepare a mixture (e.g., process S20). In exemplary embodiments, the active material precursor and the lithium source may be mixed using a dry high-speed mixer.

The lithium source may include, for example, lithium carbonate (Li₂CO₃), lithium nitrate (LiNO₃), lithium acetate (CH₃COOLi), lithium oxide (Li₂O), lithium hydroxide (LiOH) and the like. These may be used alone or in combination of two or more thereof. In one embodiment, lithium hydroxide may be used as the lithium source.

In some embodiments, the dopant-containing source may be mixed together with the lithium source.

The mixture may be calcined to form preliminary active material particles (e.g., process S30).

According to embodiments of the present disclosure, the calcination may be performed at a temperature of 900 °C or higher, 910 °C or higher, 920 °C or higher, 930 °C or higher, 940 °C or higher, 950 °C or higher, 960 °C or higher, or 970 °C or higher. Within this range, sufficient growth of the primary particles may be induced.

In exemplary embodiments, the calcination may be performed at a temperature of 1,100 °C or lower, 1,090 °C or lower, 1,080 °C or lower, 1,070 °C or lower, 1,060 °C or lower, 1,050 °C or lower, 1,040 °C or lower, 1,030 °C or lower, 1,020 °C or lower, 1,010 °C or lower, 1,000 °C or lower, 990 °C or lower, or 980 °C or lower. Within this range, excessive generation of secondary particles may be prevented.

In one embodiment, the calcination may be performed at a temperature in a range of 900 °C to 1,100 °C, 910 °C to 1,080 °C, 920 °C to 1,050 °C, 930 °C to 1,030 °C, 940 °C to 1,000 °C, 950 °C to 990 °C, or 960 °C to 980 °C.

Through calcination, the mixture may be subjected to heat treatment at a sufficiently high temperature to prevent excessive formation of secondary particles while inducing sufficient growth of the primary particles, thereby forming preliminary active material particles having a pseudo single-crystal structure.

In exemplary embodiments, the calcination may be a primary calcination, and a secondary calcination may be additionally performed on the preliminary active material particles. For example, cathode active material particles may be formed without performing an additional calcination. For example, cathode active material particles may be formed by performing the secondary calcination on the preliminary active material particles. The secondary calcination may be performed at a temperature lower than that of the primary calcination (e.g., process S40). By additionally performing the secondary calcination at a relatively low temperature, excessive growth of the primary particles may be suppressed while promoting more uniform growth thereof.

According to exemplary embodiments, the secondary calcination may be performed at a temperature of 850 °C or lower, 840 °C or lower, 830 °C or lower, 820 °C or lower, 810 °C or lower, or 800 °C or lower. Within this range, excessive growth of the particles may be effectively suppressed.

According to exemplary embodiments, the secondary calcination may be performed at a temperature of 700 °C or higher, 710 °C or higher, 720 °C or higher, 730 °C or higher, 740 °C or higher, 750 °C or higher, 760 °C or higher, 770 °C or higher, or 780 °C or higher. Within this range, crystallinity may be improved.

In some embodiments, the temperature of the secondary calcination may be in a range of 700 °C to 850 °C, 720 °C to 840 °C, 740 °C to 830 °C, 750 °C to 820 °C, or 760 °C to 800 °C.

Within this temperature range, while improving crystallinity, excessive particle growth may be more effectively suppressed.

The secondary calcination may be performed for a longer period of time than the primary calcination. Accordingly, while preventing excessive growth of the particles, more uniform growth of the particles may be promoted.

In some embodiments, the primary calcination may be performed for a period of 12 hours or less. For example, the primary calcination may be performed for 10 hours or less, 8 hours or less, 6 hours or less, or 5 hours or less.

The secondary calcination may be performed for a period of 5 hours or more, for example, for 6 hours or more, 7 hours or more, 8 hours or more, 9 hours or more, or 10 hours or more.

After the secondary calcination, the cathode active material particles may be naturally cooled to room temperature, for example, and then subjected to pulverization and classification.

In some embodiments, after the secondary calcination, impurities such as LiOH and Li₂CO₃, etc. remaining on the surface of the cathode active material particles may be removed by washing with an aqueous or organic solvent. Accordingly, the electrochemical characteristics and stability of the secondary battery may be improved.

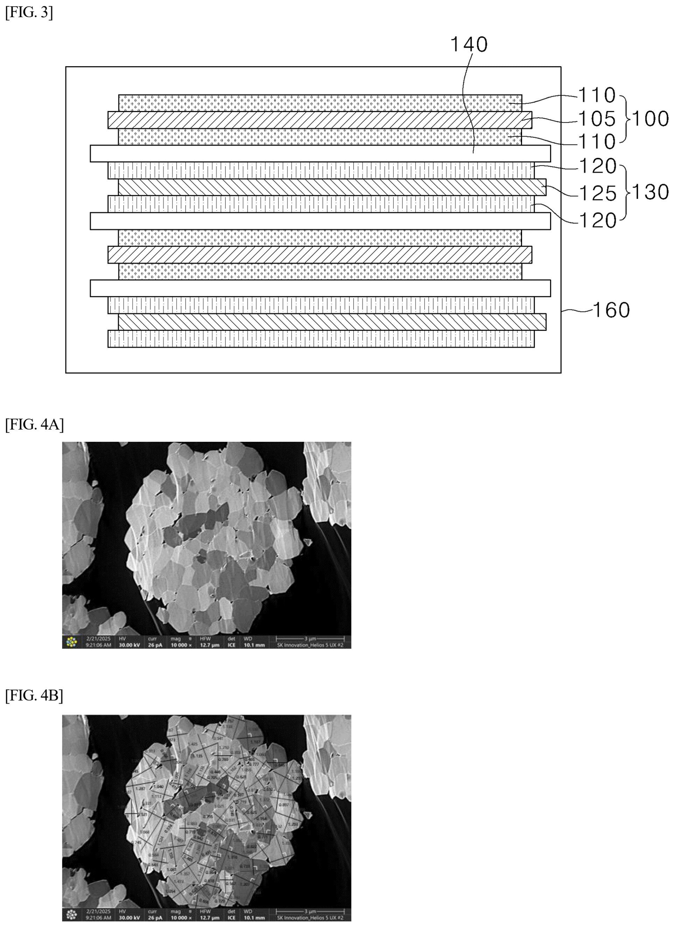

FIGS. 2 and 3 are a schematic plan view and a schematic cross-sectional view, respectively, illustrating a lithium secondary battery according to exemplary embodiments. For example, FIG. 3 is a cross-sectional view taken along line I-I of FIG. 2 in a thickness direction.

FIGS. 2 and 3 provide an exemplary lithium secondary battery for convenience of illustration, and the lithium secondary battery of the present disclosure is not limited to the structures shown in FIGS. 2 and 3.

Referring to FIGS. 2 and 3, the lithium secondary battery may include an electrode assembly 150 including a cathode 100 and an anode 130. The electrode assembly 150 may further include a separator 140. A plurality of cathodes 100 and a plurality of anodes 130 may be stacked with the separator 140 interposed therebetween to form the electrode assembly 150. The electrode assembly 150 may be accommodated in a case 160 together with an electrolyte to be impregnated.

The cathode 100 may include a cathode current collector 105 and a cathode active material layer 110 formed on at least one surface of the cathode current collector 105. In some embodiments, the cathode active material layer 110 may be formed on both surfaces (upper and lower surfaces) of the cathode current collector 105, respectively.

The cathode active material layer 110 may include a cathode active material including the above-described lithium-nickel metal oxide.

For example, a cathode slurry may be prepared by mixing and stirring the cathode active material with a binder, a conductive material, and/or a dispersant in a solvent. The prepared cathode slurry may be coated onto at least one surface of the cathode current collector 105, and then dried and roll-pressed to fabricate the cathode 100.

For example, the cathode current collector 105 may include stainless steel, nickel, aluminum, titanium, or an alloy thereof. The cathode current collector 105 may also include aluminum or stainless steel having a surface treated with carbon, nickel, titanium, or silver. For example, the cathode current collector 105 may have a thickness of 10 µm to 50 µm.

The binder may include polyvinylidene fluoride (PVDF), poly(vinylidene fluoride-co-hexafluoropropylene), polyacrylonitrile, polymethyl methacrylate, acrylonitrile butadiene rubber (NBR), polybutadiene rubber (BR), styrene-butadiene rubber (SBR), a polyacrylic acid-based binder, a poly(3,4-ethylenedioxythiophene) (PEDOT)-based binder and the like. In some embodiments, a PVDF-based binder may be used as the cathode binder.

The conductive material may be added to enhance the conductivity and/or the mobility of lithium ions or electrons. For example, non-limiting examples of the conductive material may include carbon-based conductive materials such as graphite, carbon black, acetylene black, Ketjen black, graphene, carbon nanotubes (CNTs), vapor-grown carbon fibers (VGCF), and carbon fibers; and/or metal-based conductive materials such as tin, tin oxide, and titanium oxide; as well as perovskite materials such as LaSrCoO₃, and LaSrMnO₃.

According to exemplary embodiments, the cathode active material layer 110 may have a density (electrode density or slurry density) of 2.8 g/cc or more, and in one embodiment, 3.0 g/cc or more. For example, the density of the cathode active material layer 110 may be 3.0 g/cc to 4.0 g/cc, or 3.0 g/cc to 3.5 g/cc.

Within the above density range, cracking of particles may be prevented, and the enhanced mechanical properties of the lithium-nickel metal oxide and the lithium manganese iron phosphate may be sufficiently achieved at the unit of the active material layer.

The anode 130 may include an anode current collector 125 and an anode active material layer 120 formed on at least one surface of the anode current collector 125. The anode active material layer 120 may include an anode active material.

Non-limiting examples of the anode current collector 125 may include a copper foil, nickel foil, stainless steel foil, titanium foil, nickel foam, copper foam, or a polymer substrate coated with a conductive metal. The anode current collector 125 may have, for example, a thickness of 10 µm to 50 µm.

As the anode active material, any material known in the related art, so long as it can absorb and desorb lithium ions, may be used without particular limitation thereof. For example, carbon-based materials such as crystalline carbon, amorphous carbon, carbon composite, carbon fibers, etc., a lithium metal, a lithium alloy, a silicon-containing material, or a tin-containing material may be used.

Examples of the amorphous carbon may include hard carbon, soft carbon, coke, mesocarbon microbead (MCMB), mesophase pitch-based carbon fiber (MPCF) or the like.

Examples of the crystalline carbon may include graphite-based carbon such as natural graphite, artificial graphite, graphitized coke, graphitized MCMB, graphitized MPCF or the like

The lithium metal may include pure lithium metal or lithium metal having a protective layer formed thereon for suppressing dendrite growth, etc. In one embodiment, a lithium metal-containing layer deposited or coated onto the anode current collector may be used as the anode active material layer. In one embodiment, a lithium thin-film layer may be used as the anode active material layer.

Elements contained in the lithium alloy may include aluminum, zinc, bismuth, cadmium, antimony, silicon, lead, tin, gallium or indium, etc.

The silicon-containing material may provide further increased capacity characteristics. The silicon-containing material may include Si, SiOx (0<x<2), a metal-doped SiOx (0<x<2), a silicon-carbon composite, etc. The metal may include lithium and/or magnesium, and the metal-doped SiOx (0<x<2) may include a metal silicate.

In some embodiments, an anode slurry may be prepared by mixing and stirring the anode active material with a binder, a conductive material and/or a dispersant in a solvent. The anode slurry may be coated onto at least one surface of the anode current collector, and then dried and roll-pressed to fabricate the anode 130.

As the binder and conductive material, materials substantially the same as or similar to the binder and conductive material included in the cathode may be used. In some embodiments, as the anode binder, a styrene-butadiene rubber (SBR)-based binder, carboxymethyl cellulose (CMC), polyacrylic acid-based binder, poly(3,4-ethylenedioxythiophene) (PEDOT)-based binder, and the like may be used.

In some embodiments, the separator 140 may be interposed between the cathode 100 and the anode 130. The separator 140 may include a porous polymer film or a porous non-woven fabric.

The porous polymer film may include a polyolefin-based polymer such as an ethylene polymer, a propylene polymer, an ethylene/butene copolymer, an ethylene/hexene copolymer, or an ethylene/methacrylate copolymer, etc.

The porous nonwoven fabric may include glass fibers having a high melting point, polyethylene terephthalate fibers, etc. The separator 140 may also include a ceramic-based material. For example, inorganic particles may be coated on the polymer film or dispersed within the polymer film to improve heat resistance.

According to exemplary embodiments, an electrode cell may be defined by the cathode 100, the anode 130 and the separator 140, and a plurality of electrode cells may be stacked to form, for example, a jelly roll type electrode assembly 150. For example, the electrode assembly 150 may be a winding type, a stacking type, a z-folding type, or a stacked-folding type.

The electrode assembly 150 may be accommodated in the case 160 together with the electrolyte to define a lithium secondary battery. According to exemplary embodiments, a non-aqueous electrolyte may be used as the electrolyte.

The non-aqueous electrolyte may include a lithium salt of an electrolyte and an organic solvent, the lithium salt is represented by, for example, Li⁺X⁻, and as an anion (X) of the lithium salt, F⁻, Cl⁻, Br⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, (CF₃CF₂SO₂)₂N⁻, and the like may be exemplified.

As the organic solvent, for example, propylene carbonate (PC), ethylene carbonate (EC), diethyl carbonate (DEC), dimethyl carbonate (DMC), ethyl methyl carbonate (EMC), methyl propyl carbonate, dipropyl carbonate, dimethyl sulfoxide, acetonitrile, dimethoxyethane, diethoxyethane, vinylene carbonate, sulfolane, γ-butyrolactone, propylene sulfite, tetrahydrofuran, and the like may be used. These compounds may be used alone or in combination of two or more thereof.

In some embodiments, a solid electrolyte may be used in place of the above-described non-aqueous electrolyte. In this case, the lithium secondary battery may be manufactured in the form of an all-solid-state battery. In addition, a solid electrolyte layer may be disposed between the cathode and the anode in place of the above-described separator.

The solid electrolyte may include a sulfide-based electrolyte. As a non-limiting example, the sulfide-based electrolyte may include Li₂S-P₂S₅, Li₂S-P₂S₅-LiCl, Li₂S-P₂S₅-LiBr, Li₂S-P₂S₅-LiCl-LiBr, Li₂S-P₂S₅-Li2O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (m and n are positive numbers, Z is Ge, Zn or Ga), Li₂S-GeS₂, Li₂S-SiS₂-Li₃PO₄, Li₂S-SiS₂-LiₚMO_{q} (p and q are positive numbers, M is P, Si, Ge, B, Al, Ga or In), Li₇-xPS₆-xClₓ (0≤x≤2), Li₇-xPS₆-xBrₓ (0≤x≤2), Li₇-xPS₆-xIₓ (0≤x≤2), etc. These may be used alone or in combination of two or more thereof.

In one embodiment, the solid electrolyte may include an oxide-based amorphous solid electrolyte, such as, for example, Li₂O-B₂O₃-P₂O₅, Li₂O-SiO₂, Li₂O-B₂O₃, Li₂O-B₂O₃-ZnO, etc.

As shown in FIG. 2, electrode tabs (cathode tabs and anode tabs) may protrude from each cathode current collector 105 and each anode current collector 125, respectively, which belong to each electrode cell, and may extend to one end portion of the case 160. The electrode tabs may be welded together with the one end portion of the case 160 to be connected with electrode leads (a cathode lead 107 and an anode lead 127) that extend or are exposed to the outside of the case 160.

In FIG. 2, the cathode lead 107 and the anode lead 127 are shown to protrude from an upper side of the case 160 in a planar direction, but positions of these electrode leads are not limited thereto. For example, the electrode leads may protrude from at least one of both sides of the case 160, or may protrude from a lower side of the case 160. Alternatively, the cathode lead 107 and the anode lead 127 may be formed to protrude from different sides of the case 160, respectively.

The lithium secondary battery may be manufactured, for example, in a cylindrical, prismatic, pouch, or coin type using a can.

The invention relates also to the following numbered aspects:
Aspect 1. A cathode active material for a lithium secondary battery comprising a lithium-nickel metal oxide having a secondary particle structure in which primary particles are agglomerated,
   wherein the number of primary particles included in the secondary particle is 20 to 200, and
   among the primary particles, the number of primary particles having a major axis length of 0.8 µm or more is 20 to 80.
Aspect 2. The cathode active material for a lithium secondary battery according to aspect 1, wherein the number of primary particles included in the secondary particle is 80 to 200.
Aspect 3. The cathode active material for a lithium secondary battery according to aspect 1 or 2, wherein among the primary particles, the number of primary particles having a major axis length of 0.8 µm or more is 30 to 80.
Aspect 4. The cathode active material for a lithium secondary battery according to any one of aspects 1 to 3, wherein a relative standard deviation (%RSD) of the major axis lengths of the primary particles having a major axis length of 0.8 µm or more is 35 or less.
Aspect 5. The cathode active material for a lithium secondary battery according to any one of aspects 1 to 4, wherein a relative standard deviation (%RSD) of the major widths of the primary particles having a major axis length of 0.8 µm or more is 40 or less.
Aspect 6. The cathode active material for a lithium secondary battery according to any one of aspects 1 to 5, wherein the number of primary particles having a major axis length of 1.0 µm or more is 20 to 50.
Aspect 7. The cathode active material for a lithium secondary battery according to aspect 6, wherein a relative standard deviation (%RSD) of the major axis lengths of the primary particles having a major axis length of 1.0 µm or more is 35 or less.
Aspect 8. The cathode active material for a lithium secondary battery according to aspect 6 or 7, wherein a relative standard deviation (%RSD) of the major widths of the primary particles having a major axis length of 1.0 µm or more is 40 or less.
Aspect 9. The cathode active material for a lithium secondary battery according to any one of aspects 1 to 8, wherein the primary particles have a median particle diameter (D50) of 0.8 µm to 3 µm.
Aspect 10. The cathode active material for a lithium secondary battery according to any one of aspects 1 to 9, wherein the lithium-nickel metal oxide further comprises at least one element selected from the group consisting of W, Mo, Nb, B, Ta, and Sn.
Aspect 11. The cathode active material for a lithium secondary battery according to any one of aspects 1 to 10, wherein a span of the secondary particle, expressed by Equation 1 below, is 0.9 or less:

   [Equation 1] $Span = \left(D90-D10\right) / D 50$
   wherein, in Equation 1, D10 is a particle size corresponding to a cumulative percentage of 10% in a volume-based cumulative particle size distribution of the secondary particles, D90 is a particle size corresponding to a cumulative percentage of 90% in the volume-based cumulative particle size distribution of the secondary particles, and D50 is a particle size corresponding to a cumulative percentage of 50% in the volume-based cumulative particle size distribution of the secondary particles.
Aspect 12. The cathode active material for a lithium secondary battery according to any one of aspects 1 to 11, wherein a circularity of the secondary particle, expressed by Equation 2 below, is 0.70 or more:

   [Equation 2] $Circularity = \frac{4 πA}{{P}^{2}}$
   wherein, in Equation 2, A is a cross-sectional area of the secondary particle, and P is a length of a boundary of the secondary particle.
Aspect 13. The cathode active material for a lithium secondary battery according to any one of aspects 1 to 12, wherein a roundness of the secondary particles, expressed by Equation 3 below, is 0.90 or more:

   [quation 3] $Roundness = \frac{4 A}{{L}^{2} π}$
   wherein, in Equation 3, A is a cross-sectional area of the secondary particle, and L is the major axis length of the secondary particle.
Aspect 14. A lithium secondary battery comprising a cathode comprising:
   the cathode active material of any one of aspects 1 to 13; and
   an anode disposed opposite the cathode.

### Examples and Comparative Examples

### (1) Example 1

### 1) Preparation of Cathode active material

NiSO₄, CoSO₄, and MnSO₄ were added to distilled water and mixed in a ratio of 88:7:5. The distilled water was used after dissolved oxygen had been removed by bubbling nitrogen (N₂) for 24 hours.

Thereafter, the mixed solution was introduced into a reactor at 60 °C, NH₄OH was added to the reactor, and the mixture was stirred at a constant speed to prepare a transition metal solution. NaOH was then added to the reactor at a constant speed so that the molar ratio of the transition metal to NaOH in the transition metal solution was 1:2. Thereafter, a co-precipitation reaction was performed to prepare an active material precursor (D50: 10.22 µm) in the form of a hydroxide. The median particle diameter (D50) of the prepared precursor particles was measured as the particle diameter corresponding to the 50% point of the volume-based cumulative particle size distribution obtained using the laser diffraction method (Microtrac, MT 3000).

The active material precursor particles, lithium hydroxide, and 0.25 mol% of WO₃ as a dopant-containing source based on the total molar amount of the active material precursor particles were added to a dry high-speed mixer, and uniformly mixed for approximately 5 minutes to produce a mixture.

The mixture was placed in a calcination furnace and heated to a temperature of 970 °C at a heating rate of 2 °C/min, and maintained at 970 °C for 5 hours to perform a primary calcination.

Thereafter, the temperature was lowered to 780 °C and maintained at 780 °C for 10 hours to perform a secondary calcination.

During the calcination, oxygen was continuously supplied to the calcination furnace at a flow rate of 10 mL/min. After completion of the calcination, the calcined product was allowed to cool naturally to room temperature, and then pulverized and classified to prepare cathode active material particles.

### 2) Manufacture of Secondary Battery (Coin-Half Cell)

The cathode active material particles, carbon black, and PVDF were dispersed in N-methyl-2-pyrrolidone (NMP) at a weight ratio of 93:5:2 to prepare a cathode slurry.

The cathode slurry was applied to an aluminum foil (thickness: 20 µm), and then dried and roll-pressed to fabricate a cathode. Lithium metal (thickness: 1.0 mm) was used as a counter electrode (anode).

The cathode and the anode were notched into circular shapes having diameters of Φ14 and Φ16, respectively, and laminated. A separator (polyethylene (PE), thickness: 13 µm) notched into Φ19 was interposed between the cathode and the anode to form an electrode assembly.

The electrode assembly was placed in a coin cell case (2032 standard), and an electrolyte was injected into the coin cell case to manufacture a preliminary lithium secondary battery.

A 1M LiPF₆ solution prepared in a mixed solvent of EC/EMC (10:20 v/v) was used as the electrolyte.

The preliminary lithium secondary battery was subjected to CC/CV charging (0.1C constant current, CC cut-off voltage: 4.3 V, CV cut-off current: 0.005C) and CC discharging (0.1C constant current, 3.0 V cut-off) at 25 °C. Two charge and discharge cycles were performed to manufacture an activated lithium secondary battery.

### (2) Examples 2 to 20 and Comparative Examples 1 to 11

Cathode active materials and lithium secondary batteries of the examples and comparative examples satisfying Table 1 below were manufactured in the same manner as in Example 1, except that a Ni content of the precursor, a type/content of the dopant, and a calcination temperature were adjusted.

**[TABLE 1]**

| | Ni content | Median particle diameter of precursor (µm) | Dopant elements used | Dopant content | Calcination temperature (°C) | |
|---|---|---|---|---|---|---|
| | | | | | Primary calcination | Secondary calcination |
| Example 1 | 0.88 | 10.22 | W | 0.25 | 970 | 780 |
| Example 2 | 0.88 | 10.22 | W | 0.15 | 970 | 780 |
| Example 3 | 0.88 | 10.22 | W | 0.5 | 970 | 780 |
| Example 4 | 0.88 | 10.22 | Mo | 0.25 | 970 | 780 |
| Example 5 | 0.88 | 7.17 | W | 0.25 | 970 | 780 |
| Example 6 | 0.88 | 13.19 | W | 0.25 | 970 | 780 |
| Example 7 | 0.88 | 10.22 | Nb | 0.25 | 970 | 780 |
| Example 8 | 0.88 | 10.22 | B | 0.25 | 970 | 780 |
| Example 9 | 0.88 | 10.22 | Ta | 0.25 | 970 | 780 |
| Example 10 | 0.88 | 10.22 | Sn | 0.25 | 970 | 780 |
| Example 11 | 0.88 | 10.22 | W | 0.25 | 940 | 780 |
| Example 12 | 0.88 | 10.22 | W | 0.25 | 1000 | 780 |
| Example 13 | 0.88 | 10.22 | W | 0.25 | 970 | 750 |
| Example 14 | 0.88 | 10.22 | W | 0.25 | 970 | 820 |
| Example 15 | 0.6 | 9.83 | W | 0.25 | 970 | 780 |
| Example 16 | 0.6 | 9.83 | W | 0.15 | 970 | 780 |
| Example 17 | 0.6 | 9.83 | W | 0.5 | 970 | 780 |
| Example 18 | 0.88 | 10.22 | W | 0.25 | 970 | |
| Example 19 | 0.88 | 10.22 | W | 0.25 | 1000 | |
| Example 20 | 0.88 | 10.22 | W | 0.25 | 780 | 970 |
| Comparative Example 1 | 0.88 | 10.22 | - | - | 970 | 780 |
| Comparative Example 2 | 0.88 | 10.22 | Sr | 0.25 | 970 | 780 |
| Comparative Example 3 | 0.88 | 10.22 | Zr | 0.25 | 970 | 780 |
| Comparative Example 4 | 0.88 | 10.22 | W | 0.25 | 780 | |
| Comparative Example 5 | 0.88 | 10.22 | W | 0.25 | 850 | |
| Comparative Example 6 | 0.88 | 10.22 | W | 0.25 | 1050 | |
| Comparative Example 7 | 0.88 | 10.22 | W | 1.0 | 970 | 780 |
| Comparative Example 8 | 0.88 | 2.97 | W | 0.25 | 970 | 780 |
| Comparative Example 9 | 0.88 | 15.83 | W | 0.25 | 970 | 780 |
| Comparative Example 10 | 0.6 | 9.83 | - | - | 970 | 780 |
| Comparative Example 11 | 0.6 | 9.83 | W | 1.0 | 970 | 780 |

### Evaluation Example

### (1) Measurement of Cathode active material Properties

### 1) Primary particles

Scanning electron microscope (SEM) analysis was performed on the cathode active material particles of the examples and comparative examples. A Helios Nanolab 650 manufactured by Thermo Fisher was used as the SEM equipment.

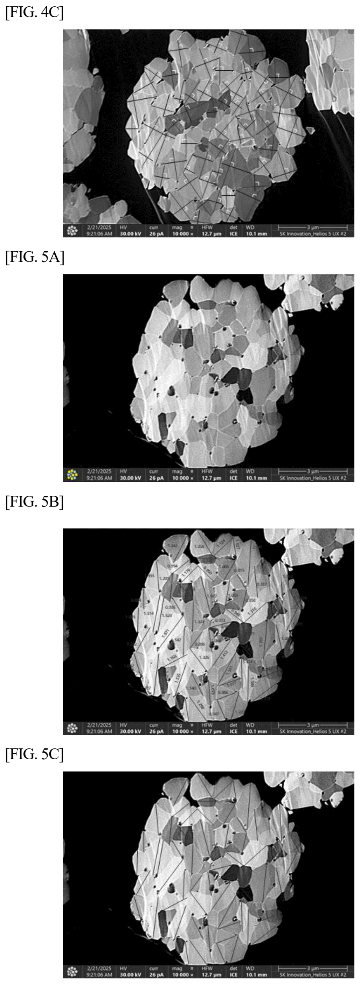

FIGS. 4A to 13C are scanning electron microscope (SEM) images (magnification: ×10,000) of primary particles of the cathode active materials of the examples and comparative examples, respectively.

FIGS. 4A to 4C are scanning electron microscope (SEM) images (magnification: ×10,000) of primary particles of the cathode active material of Example 1.

FIGS. 5A to 5C are scanning electron microscope (SEM) images (magnification: x10,000) of primary particles of the cathode active material of Example 2.

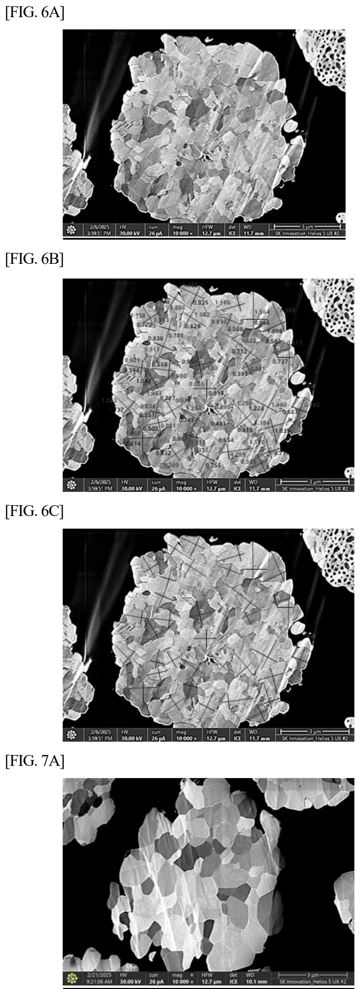

FIGS. 6A to 6C are scanning electron microscope (SEM) images (magnification: x10,000) of primary particles of the cathode active material of Example 3.

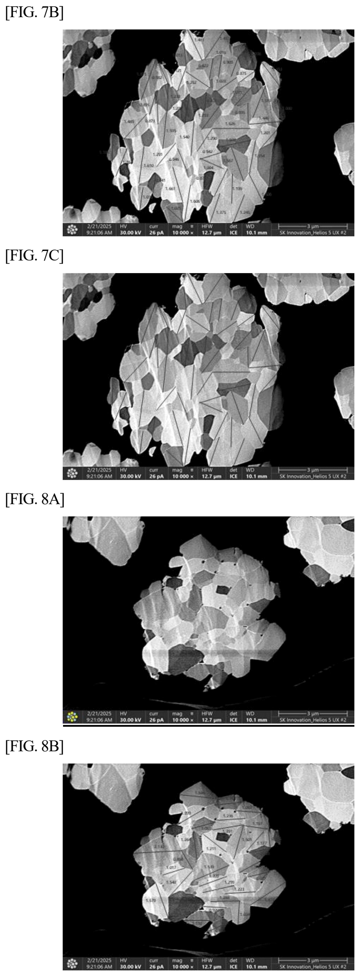

FIGS. 7A to 7C are scanning electron microscope (SEM) images (magnification: x10,000) of primary particles of the cathode active material of Example 4.

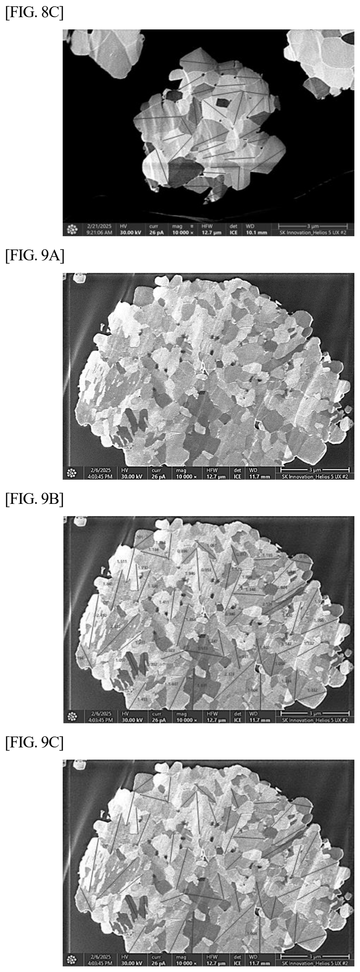

FIGS. 8A to 8C are scanning electron microscope (SEM) images (magnification: x10,000) of primary particles of the cathode active material of Example 5.

FIGS. 9A to 9C are scanning electron microscope (SEM) images (magnification: x10,000) of primary particles of the cathode active material of Example 6.

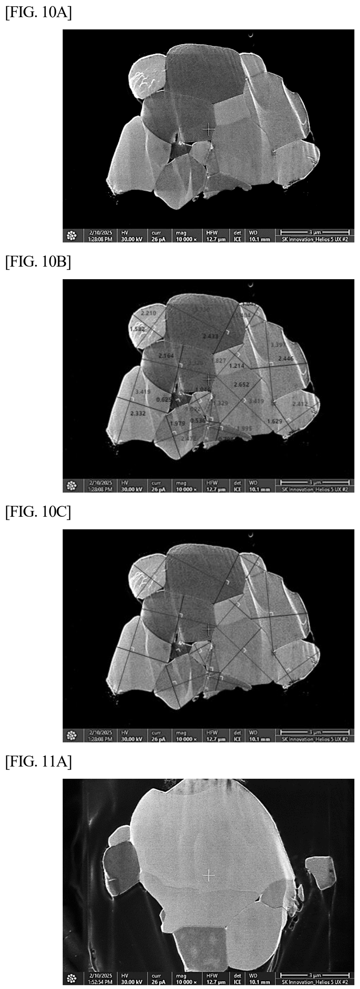

FIGS. 10A to 10C are scanning electron microscope (SEM) images (magnification: x10,000) of primary particles of the cathode active material of Comparative Example 1.

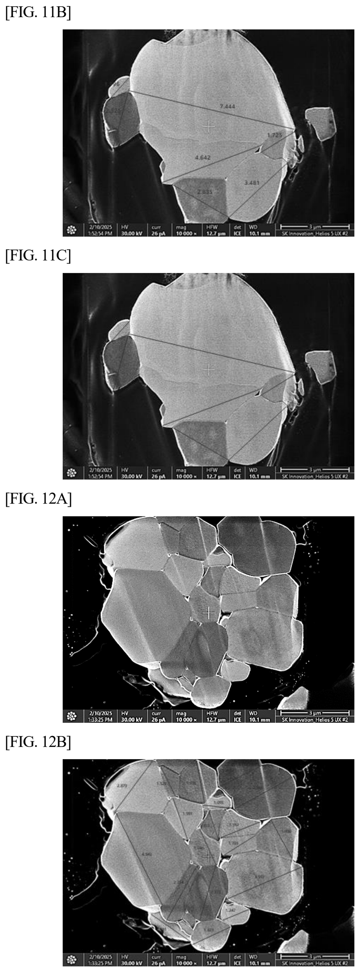

FIGS. 11A to 11C are scanning electron microscope (SEM) images (magnification: x10,000) of primary particles of the cathode active material of Comparative Example 2.

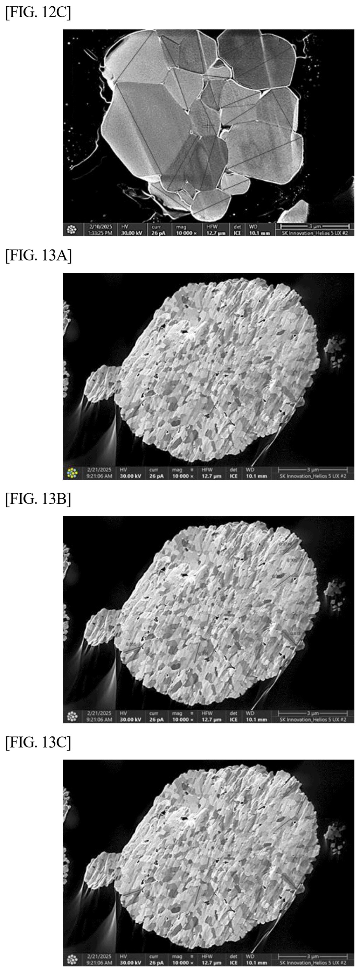

FIGS. 12A to 12C are scanning electron microscope (SEM) images (magnification: x10,000) of primary particles of the cathode active material of Comparative Example 3.

FIGS. 13A to 13C are scanning electron microscope (SEM) images (magnification: ×10,000) of primary particles of the cathode active material of Comparative Example 4.

Through SEM analysis, the number of primary particles included in a secondary particle, the number of primary particles having a major axis length of 0.8 µm or more, and the number of primary particles having a major axis length of 1.0 µm or more were measured. In addition, a relative standard deviation (%RSD) of a major axis length and a major width was measured for primary particles having a major axis length of 0.8 µm or more, and a relative standard deviation (%RSD) of a major axis length and a major width was measured for primary particles having a major axis length of 1.0 µm or more.

The measurement results are shown in Table 2 below.

**[TABLE 2]**

| | Total number of primary particles | Primary particles having a major axis length of 0.8 µm or more | | | Primary particles having a major axis length of 1.0 µm or more | | |
|---|---|---|---|---|---|---|---|
| | | Number | Relative standard deviation of major axis length (%RSD) | Relative standard deviation of major width (%RSD) | Number | Relative standard deviation of major axis length (%RSD) | Relative standard deviation of major width (%RSD) |
| Example 1 | 105 | 58 | 20.57390 | 31.35425 | 43 | 17.61485 | 28.27550 |
| Example 2 | 93 | 62 | 23.40111 | 34.63180 | 44 | 19.69727 | 32.64891 |
| Example 3 | 163 | 36 | 18.24728 | 22.87312 | 21 | 11.48415 | 19.97311 |
| Example 4 | 92 | 53 | 22.72177 | 26.00196 | 42 | 18.33080 | 29.91438 |
| Example 5 | 58 | 32 | 23.62545 | 29.89641 | 26 | 20.53121 | 30.68103 |
| Example 6 | 198 | 47 | 29.96487 | 35.69120 | 39 | 26.68062 | 35.93186 |
| Example 7 | 85 | 50 | 23.97451 | 32.66788 | 40 | 21.00898 | 35.72133 |
| Example 8 | 82 | 46 | 25.88153 | 36.54732 | 35 | 24.51893 | 31.93675 |
| Example 9 | 67 | 35 | 24.36486 | 37.87431 | 22 | 22.68412 | 30.86341 |
| Example 10 | 64 | 36 | 26.87613 | 39.88112 | 25 | 24.93616 | 32.75124 |
| Example 11 | 142 | 40 | 19.66482 | 22.52176 | 18 | 14.66384 | 27.63314 |
| Example 12 | 78 | 55 | 24.39416 | 33.71208 | 41 | 21.95061 | 30.71277 |
| Example 13 | 111 | 51 | 24.64128 | 32.99542 | 43 | 23.66845 | 30.77411 |
| Example 14 | 99 | 60 | 24.82315 | 34.11579 | 45 | 24.64110 | 32.22822 |
| Example 15 | 128 | 38 | 22.55472 | 27.91537 | 25 | 20.13754 | 29.04431 |
| Example 16 | 110 | 45 | 25.13098 | 30.76643 | 31 | 24.75123 | 31.67958 |
| Example 17 | 147 | 30 | 20.99210 | 26.60001 | 21 | 19.22170 | 28.66077 |
| Example 18 | 70 | 57 | 31.50584 | 43.41395 | 48 | 32.61215 | 45.70312 |
| Example 19 | 45 | 35 | 39.63315 | 48.63107 | 35 | 39.63315 | 48.63107 |
| Example 20 | 101 | 63 | 32.45001 | 41.38723 | 40 | 29.44700 | 33.75213 |
| Comparative Example 1 | 15 | 14 | 40.28707 | 45.71492 | 14 | 40.28707 | 45.71492 |
| Comparative Example 2 | 9 | 7 | 61.86226 | 65.76132 | 7 | 61.86226 | 65.76132 |
| Comparative Example 3 | 25 | 19 | 38.37938 | 42.45311 | 19 | 38.37938 | 42.45311 |
| Comparative Example 4 | 300 over | 6 | 5.65335 | 9.71202 | 0 | - | - |
| Comparative Example 5 | 275 | 15 | 9.59238 | 11.75239 | 3 | 4.87099 | 5.00981 |
| Comparative Example 6 | 14 | 14 | 47.99163 | 51.22849 | 14 | 47.99163 | 51.22849 |
| Comparative Example 7 | 259 | 10 | 8.01239 | 11.32227 | 0 | - | - |
| Comparative Example 8 | 1 | 1 | - | - | 1 | - | - |
| Comparative Example 9 | 300 over | 8 | 6.46108 | 7.52213 | 0 | - | - |
| Comparative Example 10 | 19 | 18 | 35.76102 | 40.87321 | 18 | 35.76102 | 40.87321 |
| Comparative Example 11 | 289 | 4 | 7.79160 | 9.88012 | 0 | - | - |

### 2) Secondary particles

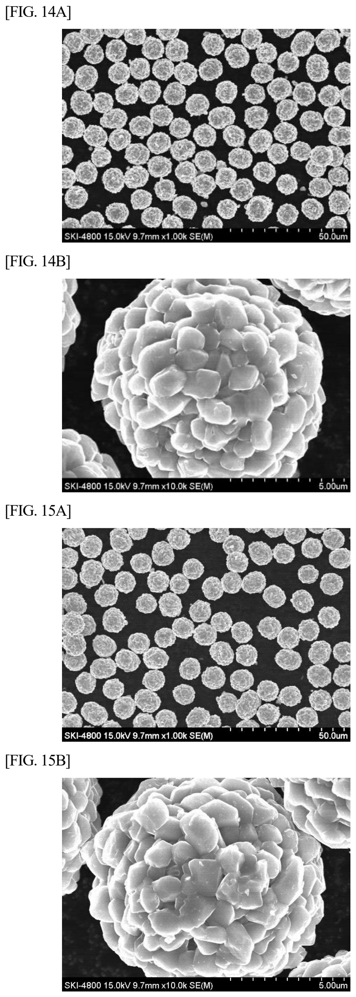

FIGS. 14A to 23B are scanning electron microscope (SEM) images of secondary particles of cathode active materials according to the examples and comparative examples, respectively (magnification: in FIGS. 14A to 23B, each of the figures denoted by "A" is a low-magnification image (magnification: x1,000), and each of the figures denoted by "B" is a high-magnification image (magnification: x10,000).

FIGS. 14A and 14B are scanning electron microscope (SEM) images of secondary particles of the cathode active material of Example 1 (magnification: 14A is a low-magnification image (magnification: x1,000), and FIG. 14B is a high-magnification image (magnification: x10,000).

FIGS. 15A and 15B are scanning electron microscope (SEM) images of secondary particles of the cathode active material of Example 2, wherein FIG. 15A is a low-magnification image (magnification: x1,000), and FIG. 15B is a high-magnification image (magnification: x10,000).

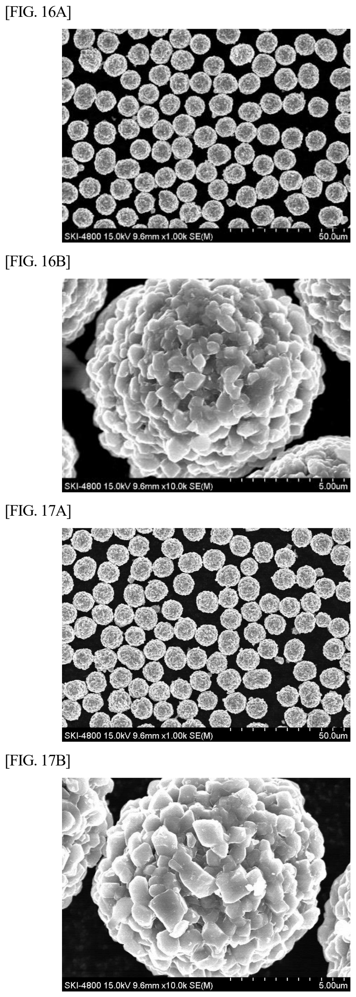

FIGS. 16A and 16B are scanning electron microscope (SEM) images of secondary particles of the cathode active material of Example 3, wherein FIG. 16A is a low-magnification image (magnification: x1,000), and FIG. 16B is a high-magnification image (magnification: x10,000).

FIGS. 17A and 17B are scanning electron microscope (SEM) images of secondary particles of the cathode active material of Example 4, wherein FIG. 17A is a low-magnification image (magnification: x1,000), and FIG. 17B is a high-magnification image (magnification: x10,000).

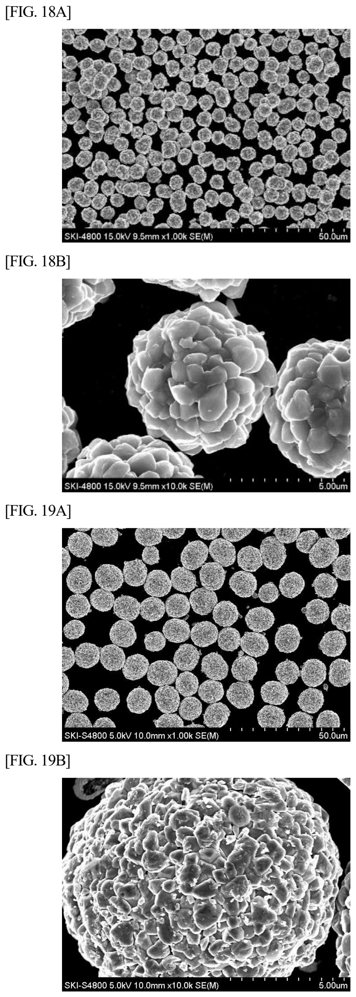

FIGS. 18A and 18B are scanning electron microscope (SEM) images of secondary particles of the cathode active material of Example 5, wherein FIG. 18A is a low-magnification image (magnification: x1,000), and FIG. 18B is a high-magnification image (magnification: x10,000).

FIGS. 19A and 19B are scanning electron microscope (SEM) images of secondary particles of the cathode active material of Example 6, wherein FIG. 19A is a low-magnification image (magnification: x1,000), and FIG. 19B is a high-magnification image (magnification: x10,000).

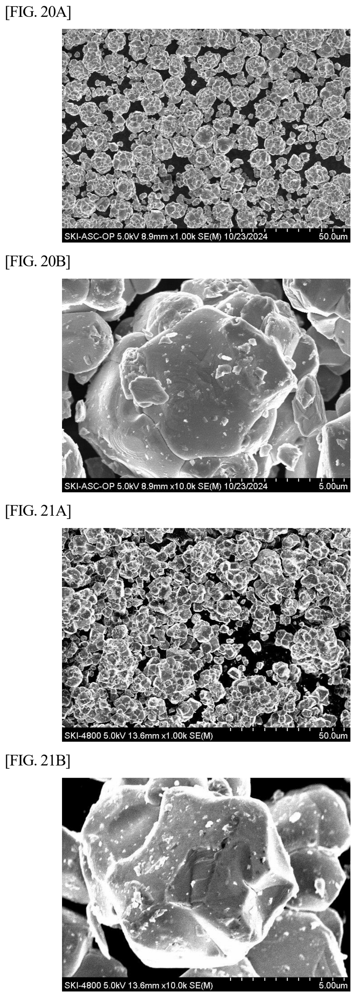

FIGS. 20A and 20B are scanning electron microscope (SEM) images of secondary particles of the cathode active material of Comparative Example 1, wherein FIG. 20A is a low-magnification image (magnification: x1,000), and FIG. 20B is a high-magnification image (magnification: x10,000).

FIGS. 21A and 21B are scanning electron microscope (SEM) images of secondary particles of the cathode active material of Comparative Example 2, wherein FIG. 21A is a low-magnification image (magnification: x1,000), and FIG. 21B is a high-magnification image (magnification: x10,000).

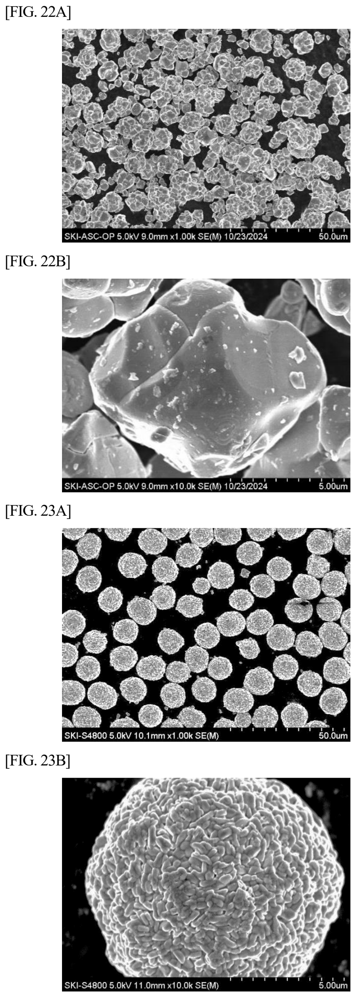

FIGS. 22A and 22B are scanning electron microscope (SEM) images of secondary particles of the cathode active material of Comparative Example 3, wherein FIG. 22A is a low-magnification image (magnification: x1,000), and FIG. 22B is a high-magnification image (magnification: x10,000).

FIGS. 23A and 23B are scanning electron microscope (SEM) images of secondary particles of the cathode active material of Comparative Example 4, wherein FIG. 23A is a low-magnification image (magnification: x1,000), and FIG. 23B is a high-magnification image (magnification: x10,000).

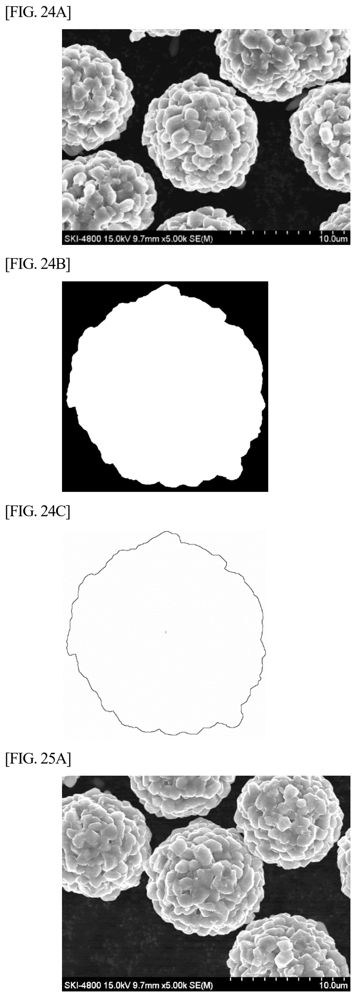

FIGS. 24A to 33C are scanning electron microscope (SEM) images (magnification: x5,000) of secondary particles of cathode active materials according to the embodiments and comparative examples, respectively, and schematically illustrate shapes of the secondary particles of cathode active materials of the respective embodiments and comparative examples.

FIG. 24A is a scanning electron microscope (SEM) image (magnification: x5,000) of secondary particles of the cathode active material of Example 1.

FIGS. 24B and 24C schematically illustrate the shape of the secondary particles of FIG. 24A.

FIG. 25A is a scanning electron microscope (SEM) image (magnification: x5,000) of secondary particles of the cathode active material of Example 2.

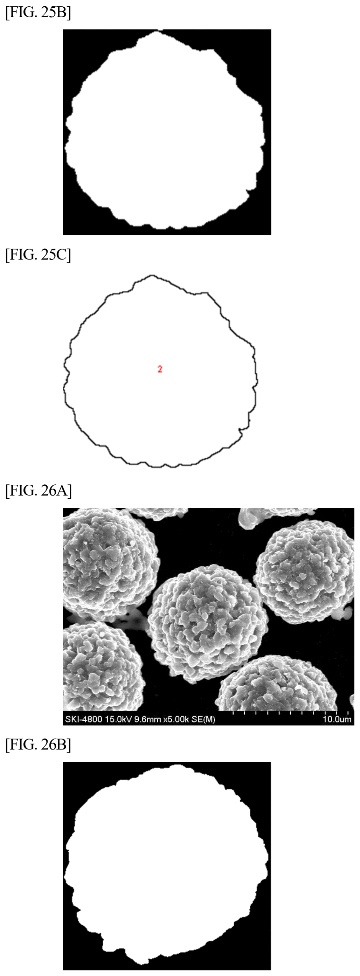

FIGS. 25B and 25C schematically illustrate the shape of the secondary particles of FIG. 25A.

FIG. 26A is a scanning electron microscope (SEM) image (magnification: x5,000) of secondary particles of the cathode active material of Example 3.

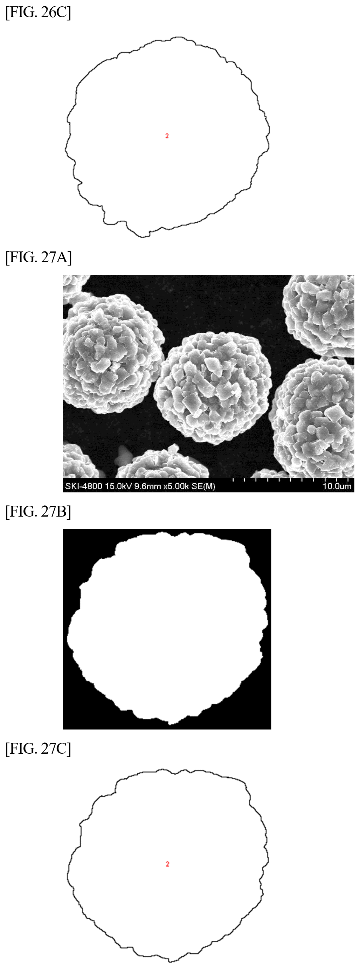

FIGS. 26B and 26C schematically illustrate the shape of the secondary particles of FIG. 26A.

FIG. 27A is a scanning electron microscope (SEM) image (magnification: x5,000) of secondary particles of the cathode active material of Example 4.

FIGS. 27B and 27C schematically illustrate the shape of the secondary particles of FIG. 27A.

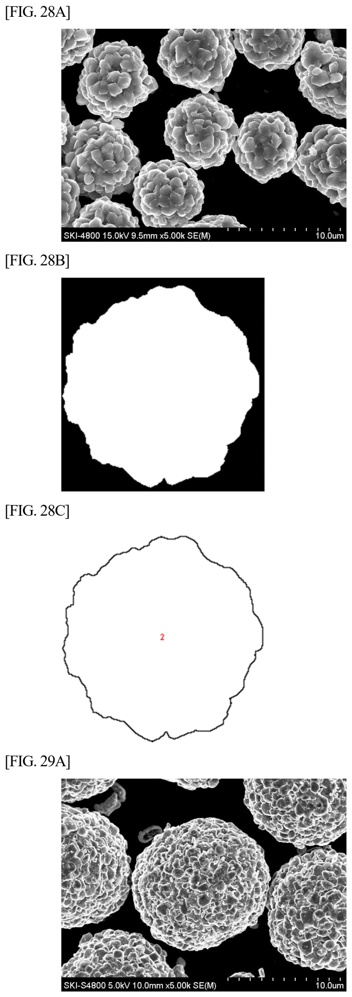

FIG. 28A is a scanning electron microscope (SEM) image (magnification: x5,000) of secondary particles of the cathode active material of Example 5.

FIGS. 28B and 28C schematically illustrate the shape of the secondary particles of FIG. 28A.

FIG. 29A is a scanning electron microscope (SEM) image (magnification: x5,000) of secondary particles of the cathode active material of Example 6.

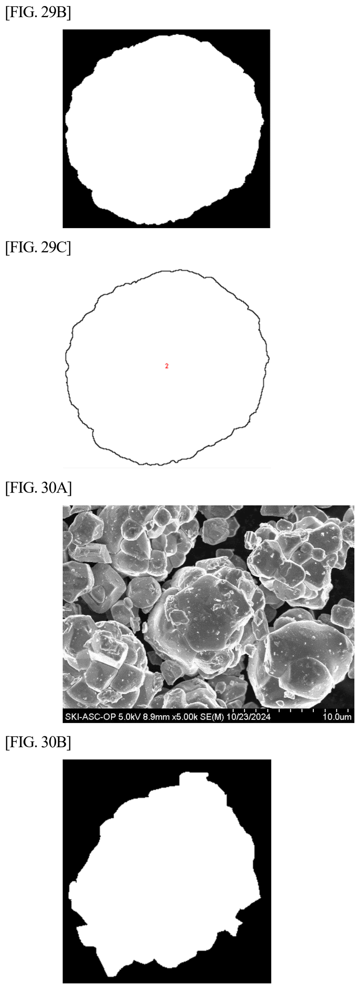

FIGS. 29B and 29C schematically illustrate the shape of the secondary particles of FIG. 29A.

FIG. 30A is a scanning electron microscope (SEM) image (magnification: x5,000) of secondary particles of the cathode active material of Comparative Example 1.

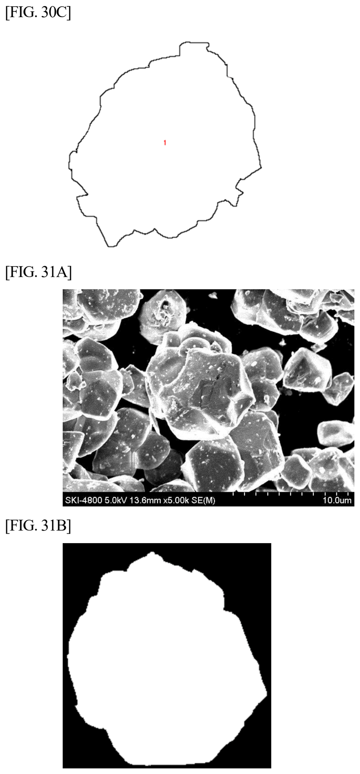

FIGS. 30B and 30C schematically illustrate the shape of the secondary particles of FIG. 30A.

FIG. 31A is a scanning electron microscope (SEM) image (magnification: x5,000) of secondary particles of the cathode active material of Comparative Example 2.

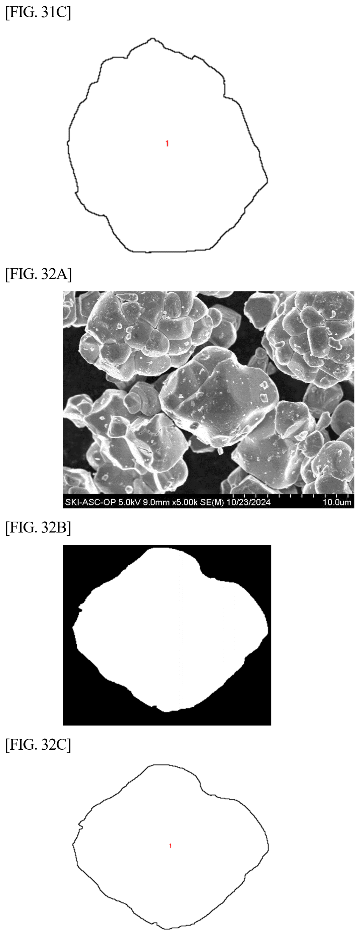

FIGS. 31B and 31C schematically illustrate the shape of the secondary particles of FIG. 31A.

FIG. 32A is a scanning electron microscope (SEM) image (magnification: x5,000) of secondary particles of the cathode active material of Comparative Example 3.

FIGS. 32B and 32C schematically illustrate the shape of the secondary particles of FIG. 32A.

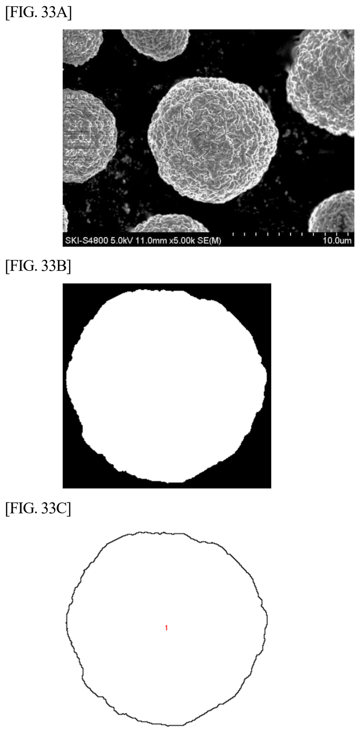

FIG. 33A is a scanning electron microscope (SEM) image (magnification: ×5,000) of secondary particles of the cathode active material of Comparative Example 4.

FIGS. 33B and 33C schematically illustrate the shape of the secondary particles of FIG. 33A.

Table 3 summarizes the particle size analysis (PSA) data, circularity, and roundness of secondary particles of the examples and comparative examples.

**[TABLE 3]**

| | D10 | D50 | D90 | Span | Circularity | Roundness |
|---|---|---|---|---|---|---|
| Example 1 | 7.49 | 9.65 | 13.36 | 0.61 | 0.747 | 0.932 |
| Example 2 | 7.59 | 9.95 | 14.06 | 0.65 | 0.787 | 0.952 |
| Example 3 | 7.30 | 9.53 | 13.53 | 0.65 | 0.738 | 0.935 |
| Example 4 | 7.44 | 9.81 | 14.07 | 0.68 | 0.780 | 0.921 |
| Example 5 | 5.20 | 7.24 | 11.32 | 0.85 | 0.763 | 0.980 |
| Example 6 | 9.60 | 12.57 | 16.94 | 0.58 | 0.807 | 0.920 |
| Example 7 | 7.55 | 9.83 | 13.83 | 0.64 | 0.725 | 0.911 |
| Example 8 | 7.56 | 9.85 | 13.78 | 0.63 | 0.727 | 0.914 |
| Example 9 | 7.86 | 9.98 | 14.00 | 0.62 | 0.711 | 0.901 |
| Example 10 | 7.85 | 10.00 | 13.95 | 0.61 | 0.702 | 0.905 |
| Example 11 | 7.02 | 9.57 | 13.32 | 0.66 | 0.762 | 0.933 |
| Example 12 | 7.58 | 9.95 | 14.25 | 0.67 | 0.775 | 0.911 |
| Example 13 | 7.45 | 9.58 | 13.35 | 0.62 | 0.741 | 0.928 |
| Example 14 | 7.55 | 9.78 | 13.60 | 0.62 | 0.722 | 0.922 |
| Example 15 | 7.22 | 9.54 | 13.89 | 0.70 | 0.740 | 0.930 |
| Example 16 | 7.31 | 9.68 | 14.00 | 0.69 | 0.722 | 0.922 |
| Example 17 | 7.21 | 9.52 | 13.68 | 0.68 | 0.742 | 0.933 |
| Example 18 | 7.15 | 9.92 | 14.58 | 0.75 | 0.712 | 0.908 |
| Example 19 | 7.01 | 10.11 | 16.10 | 0.90 | 0.703 | 0.901 |
| Example 20 | 7.22 | 9.66 | 13.98 | 0.70 | 0.721 | 0.911 |
| Comparative Example 1 | 5.44 | 9.55 | 15.75 | 1.08 | 0.612 | 0.791 |
| Comparative Example 2 | 5.18 | 10.30 | 18.92 | 1.34 | 0.786 | 0.863 |
| Comparative Example 3 | 5.53 | 9.56 | 15.65 | 1.06 | 0.794 | 0.834 |
| Comparative Example 4 | 7.45 | 9.71 | 13.66 | 0.64 | 0.840 | 0.983 |
| Comparative Example 5 | 7.89 | 9.72 | 14.23 | 0.65 | 0.823 | 0.935 |
| Comparative Example 6 | 6.23 | 10.27 | 17.33 | 1.08 | 0.692 | 0.851 |
| Comparative Example 7 | 7.22 | 9.32 | 13.27 | 0.65 | 0.770 | 0.941 |
| Comparative Example 8 | 2.54 | 4.75 | 8.43 | 1.24 | 0.592 | 0.778 |
| Comparative Example 9 | 11.73 | 15.54 | 19.55 | 0.50 | 0.802 | 0.957 |
| Comparative Example 10 | 5.80 | 9.47 | 15.88 | 1.06 | 0.623 | 0.780 |
| Comparative Example 11 | 7.11 | 9.45 | 13.50 | 0.68 | 0.781 | 0.945 |

### (2) Coin-Half Cell Evaluation

### 1) Discharge Capacity (mAh/g), and Charge-Discharge Efficiency (%)

The coin-half cells of the examples and comparative examples were charged and discharged under a 0.1C condition, and an initial charge capacity and an initial discharge capacity were measured. The charge-discharge efficiency was then evaluated by calculating a percentage of the initial discharge capacity relative to the initial charge capacity.$Charge - discharge efficiency \left(%\right) = \left(Initial discharge capacity\right) / \left(Initial charge capacity\right) \times 100 %$

### 2) Rate Characteristics (%)

The coin-half cells of the examples and comparative examples were subjected twice to CC/CV charging (0.1C constant current, CC cut-off voltage: 4.3 V, CV cut-off current: 0.005C) and CC discharging (0.1C constant current, 3.0 V cut-off). Then, the coin-half cells were subjected once to CC/CV charging (0.5C constant current, CC cut-off voltage: 4.3 V, CV cut-off current: 0.005C) and CC discharging (4.0C constant current, 3.0 V cut-off). The rate characteristics were evaluated by dividing a 4.0C discharge capacity by a 0.1C discharge capacity and converting a resulting value into a percentage (%).$Rate characterictics \left(%\right) = \left(4.0C discharge capacity\right) / \left(0.1C discharge capacity\right) \times 100 %$

### 3) High-Temperature (45°C) Capacity Retention (%)

The coin-half cells of the examples and comparative examples were subj ected to 150 cycles of CC/CV charging (0.5C constant current, CC cut-off voltage: 4.3 V, CV cut-off current: 0.05C) and CC discharging (1.0C constant current, 3.0 V cut-off) at 45 °C, respectively. A discharge capacity was measured after the 150th cycle. The capacity retention was then evaluated by calculating a percentage of the 150th discharge capacity relative to the initial discharge capacity measured in 1).$Capacity retention \left(%\right) = \left(150th discharge capacity\right) / \left(Initial discharge capacity\right) \times 100 %$

The evaluation results are shown in Table 4 below.

**[TABLE 4]**

| | Initial discharge capacity (mAh/g) | Charge-discharge efficiency (%) | Rate characteristics (%) | High-temperature capacity retention (150 cycles, %) |
|---|---|---|---|---|
| Example 1 | 220.8 | 92.3 | 82.4 | 95.7 |
| Example 2 | 218.9 | 91.5 | 80.5 | 95.5 |
| Example 3 | 220.4 | 92.2 | 82.1 | 92.3 |
| Example 4 | 219.1 | 91.7 | 81.1 | 95.2 |
| Example 5 | 219.5 | 91.8 | 82.0 | 94.0 |
| Example 6 | 218.0 | 90.7 | 78.1 | 94.9 |
| Example 7 | 218.7 | 91.3 | 79.9 | 95.0 |
| Example 8 | 218.5 | 91.1 | 80.1 | 94.7 |
| Example 9 | 217.2 | 90.8 | 78.2 | 95.1 |
| Example 10 | 216.8 | 90.5 | 77.9 | 95.0 |
| Example 11 | 220.1 | 92.0 | 81.9 | 90.2 |
| Example 12 | 215.5 | 89.9 | 77.2 | 94.8 |
| Example 13 | 219.1 | 90.7 | 80.2 | 93.4 |
| Example 14 | 218.5 | 90.4 | 80.0 | 94.1 |
| Example 15 | 204.9 | 90.3 | 77.4 | 93.4 |
| Example 16 | 202.7 | 89.1 | 75.5 | 93.1 |
| Example 17 | 204.6 | 90.0 | 77.1 | 90.1 |
| Example 18 | 217.5 | 90.1 | 78.7 | 92.1 |
| Example 19 | 212.2 | 89.9 | 72.9 | 93.4 |
| Example 20 | 218.4 | 91.8 | 77.5 | 88.9 |
| Comparative Example 1 | 205.5 | 88.7 | 65.1 | 93.2 |
| Comparative Example 2 | 201.9 | 88.1 | 64.0 | 93.5 |
| Comparative Example 3 | 206.8 | 88.9 | 66.3 | 92.4 |
| Comparative Example 4 | 221.1 | 92.5 | 82.4 | 65.1 |
| Comparative Example 5 | 220.9 | 92.4 | 82.1 | 67.8 |
| Comparative Example 6 | 208.2 | 88.5 | 60.1 | 89.9 |
| Comparative Example 7 | 218.8 | 90.8 | 80.5 | 70.0 |
| Comparative Example 8 | 219.2 | 90.1 | 66.6 | 91.1 |
| Comparative Example 9 | 220.1 | 92.0 | 82.0 | 59.9 |
| Comparative Example 10 | 189.6 | 84.7 | 60.6 | 91.2 |
| Comparative Example 11 | 203.9 | 90.1 | 76.9 | 68.4 |

### [Description of Reference Numerals]

100: Cathode
105: Cathode current collector
107: Cathode lead
110: Cathode active material layer
120: Anode active material layer
125: Anode current collector
127: Anode lead
130: Anode
140: Separator
150: Electrode assembly
160: Case

## Claims

1. A cathode active material for a lithium secondary battery comprising a lithium-nickel metal oxide having a secondary particle structure in which primary particles are agglomerated,
wherein the number of primary particles included in the secondary particle is 20 to 200, and
among the primary particles, the number of primary particles having a major axis length of 0.8 µm or more is 20 to 80.

2. The cathode active material for a lithium secondary battery according to claim 1, wherein the number of primary particles included in the secondary particle is 80 to 200.

3. The cathode active material for a lithium secondary battery according to claim 1 or 2, wherein among the primary particles, the number of primary particles having a major axis length of 0.8 µm or more is 30 to 80.

4. The cathode active material for a lithium secondary battery according to any one of claims 1 to 3, wherein a relative standard deviation (%RSD) of the major axis lengths of the primary particles having a major axis length of 0.8 µm or more is 35 or less.

5. The cathode active material for a lithium secondary battery according to any one of claims 1 to 4, wherein a relative standard deviation (%RSD) of the major widths of the primary particles having a major axis length of 0.8 µm or more is 40 or less.

6. The cathode active material for a lithium secondary battery according to any one of claims 1 to 5, wherein the number of primary particles having a major axis length of 1.0 µm or more is 20 to 50.

7. The cathode active material for a lithium secondary battery according to claim 6, wherein a relative standard deviation (%RSD) of the major axis lengths of the primary particles having a major axis length of 1.0 µm or more is 35 or less.

8. The cathode active material for a lithium secondary battery according to claim 6 or 7, wherein a relative standard deviation (%RSD) of the major widths of the primary particles having a major axis length of 1.0 µm or more is 40 or less.

9. The cathode active material for a lithium secondary battery according to any one of claims 1 to 8, wherein the primary particles have a median particle diameter (D50) of 0.8 µm to 3 µm.

10. The cathode active material for a lithium secondary battery according to any one of claims 1 to 9, wherein the lithium-nickel metal oxide further comprises at least one element selected from the group consisting of W, Mo, Nb, B, Ta, and Sn.

11. The cathode active material for a lithium secondary battery according to any one of claims 1 to 10, wherein a span of the secondary particle, expressed by Equation 1 below, is 0.9 or less: [Equation 1] $Span = \left(D90-D10\right) / D 50$ wherein, in Equation 1, D10 is a particle size corresponding to a cumulative percentage of 10% in a volume-based cumulative particle size distribution of the secondary particles, D90 is a particle size corresponding to a cumulative percentage of 90% in the volume-based cumulative particle size distribution of the secondary particles, and D50 is a particle size corresponding to a cumulative percentage of 50% in the volume-based cumulative particle size distribution of the secondary particles.

12. The cathode active material for a lithium secondary battery according to any one of claims 1 to 11, wherein a circularity of the secondary particle, expressed by Equation 2 below, is 0.70 or more: [Equation 2] $Circularity = \frac{4 πA}{{P}^{2}}$ wherein, in Equation 2, A is a cross-sectional area of the secondary particle, and P is a length of a boundary of the secondary particle.

13. The cathode active material for a lithium secondary battery according to any one of claims 1 to 12, wherein a roundness of the secondary particles, expressed by Equation 3 below, is 0.90 or more: [Equation 3] $Roundness = \frac{4 A}{{L}^{2} π}$ wherein, in Equation 3, A is a cross-sectional area of the secondary particle, and L is the major axis length of the secondary particle.

14. A lithium secondary battery comprising a cathode comprising:
the cathode active material of any one of claims 1 to 13; and
an anode disposed opposite the cathode.
